# FASCICULE DE BREVET EUROPEEN

(11) **EP 1 208 519 B1**
(45) Date de publication et mention de la délivrance du brevet: **10.12.2003**
(21) Numéro de dépôt: 00958708.0
(22) Date de dépôt: 18.08.2000
(51) Int. Cl.: G06K 7/00, G07F 7/10

(54) **SYSTEME ET PROCEDE DE CHARGEMENT DE COMMANDES DANS UNE CARTE A CIRCUIT INTEGRE**
SYSTEM UND VERFAHREN ZUM LADEN VON BEFEHLEN IN EINE IC KARTE
SYSTEM AND METHOD FOR LOADING COMMANDS INTO AN INTEGRATED CIRCUIT CARD

(30) Priorité: 24.08.1999 FR 9910747
(43) Date de publication de la demande: 29.05.2002
(73) Titulaire: SCHLUMBERGER Systèmes, 92120 Montrouge (FR)
(72) Inventeur: COHEN SOLAL, Avner, F-75015 Paris (FR); DEH, Remi, F-75014 Paris (FR)
(74) Mandataire: den Braber, Gerard Paul
(86) Numéro de dépôt international: FR0002343
(87) Numéro de publication internationale: WO01015062

(56) Documents cités:
- EP-A- 0 275 510
- EP-A- 0 798 673
- WO-A-98/09257

## Description

La présente invention concerne un système informatique selon le préambule de la revendication 1. Elle concerne également un procédé selon le préambule de la revendication 7.

Un tel dispositif s'applique en particulier pour les cartes comprenant des services tels que des services concernant le domaine de la santé, de la téléphonie mobile, ou encore, des services relatifs au domaine bancaire.

En vue de permettre à un utilisateur de la carte d'accéder à un service, l'état de la technique propose des dispositifs qui prévoient de charger dans la première mémoire de la carte, un ensemble de commandes audit service, et de pouvoir effacer ou remplacer la totalité du service par un autre service dans le cas où il ne serait plus utilisé, et ce au moyen du serveur. Lorsque l'utilisateur accède au service, le premier programme d'exécution exécute le service ainsi résident dans la carte (voir par exemple WO 9809257A, EPA 0798673 et EPA 0275510).

Bien que ces dispositifs permettent de charger la totalité des commandes propres à un service, toutes les commandes sont sauvegardées dans la première mémoire de la carte comprenant généralement plusieurs services résidents, ce qui peut être gênant du fait de la taille limitée de la mémoire des cartes à circuit intégré. De plus, le temps de chargement d'un service est sensiblement important. Enfin, dans le cas où seules quelques données du service ont changé, afin de valider lesdits changements, il est nécessaire de recharger tout le service, ce qui pose un problème d'efficacité en terme de temps.

Aussi un problème technique à résoudre par l'objet de la présente invention est de proposer un dispositif de chargement de commandes à partir d'au moins un serveur vers au moins une carte à circuit intégré connectée à une unité d'abonné, ladite carte comprenant un premier programme d'exécution de commandes et une première mémoire, ainsi qu'un procédé de chargement d'un tel dispositif, qui permettraient, d'une part, d'éviter des pertes d'espace mémoire dues aux sauvegardes en mémoire de tous les services utilisés, et, d'autre part, de diminuer le temps de chargement d'un service.

Une solution au problème technique posé est fournie par un système selon la revendication 1.

Ainsi, comme on le verra en détail plus loin, le système de l'invention permet, d'une part, d'avoir une augmentation de la taille mémoire disponible de la carte en ne sauvegardant qu'une partie des commandes propres à un service, représentées par un bloc de séquence, et, d'autre part, de gagner du temps lors d'un chargement, en ne chargeant que des blocs de séquence et en ne mettant à jour que les blocs ou données devant être modifiées.

La description qui va suivre au regard des dessins annexés, donnée à titre d'exemple non limitatif, fera bien comprendre en quoi consiste l'invention et comment elle peut être réalisée.

La figure 1 est un schéma montrant des serveurs et des cartes conformes à l'invention.

La figure 2 est un schéma d'un serveur et d'une carte de la figure 1.

La figure 3 est un schéma simplifié de services utilisés par un utilisateur de la carte de la figure 2.

La figure 4 est un schéma d'une séquence de commandes associée à un service de la figure 3.

La figure 5 est un schéma d'une commande de séquence de la figure 4.

La figure 6 est un autre schéma d'une commande de séquence de la figure 4.

La figure 7 représente un premier échange d'informations entre la carte et le serveur de la figure 2.

La figure 8 représente un second échange d'informations entre la carte et le serveur de la figure 2.

La figure 9 est un schéma plus détaillé de la carte de la figure 2.

La figure 10 représente un troisième échange d'informations entre la carte et le serveur de la figure 2.

La figure 11 est un schéma de données d'une instruction échangée entre le serveur et la carte de la figure 2.

La figure 12 est un autre schéma montrant l'instruction de la figure 11.

La figure 13 représente un quatrième échange d'informations entre la carte et le serveur de la figure 2.

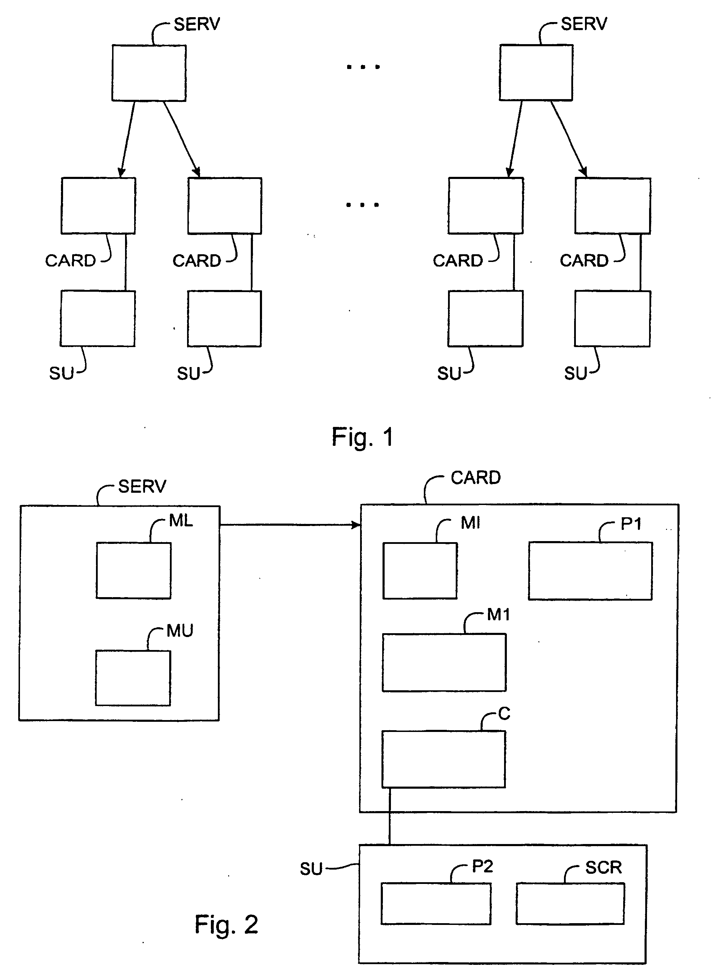

Sur la figure 1 est représenté un dispositif de chargement de commandes à partir d'un ou plusieurs serveurs SERV vers une ou plusieurs cartes CARD à circuit intégré. Lesdites cartes sont connectées à des unités d'abonné SU. Comme le montre la figure 2, un serveur SERV comporte des moyens de chargement ML de séquences SEQ de commandes et des moyens de mise à jour MU de blocs séquences de commandes. Une carte CARD comporte une première mémoire M1, un premier programme d'exécution P1 de commandes et un bloc de contacts C destiné à une connexion électrique avec une unité d'abonné SU. Elle comporte également des moyens d'interprétation MI de blocs de séquence de commandes. Une unité d'abonné SU comporte un écran SCR et un deuxième programme d'exécution P2 de commandes.

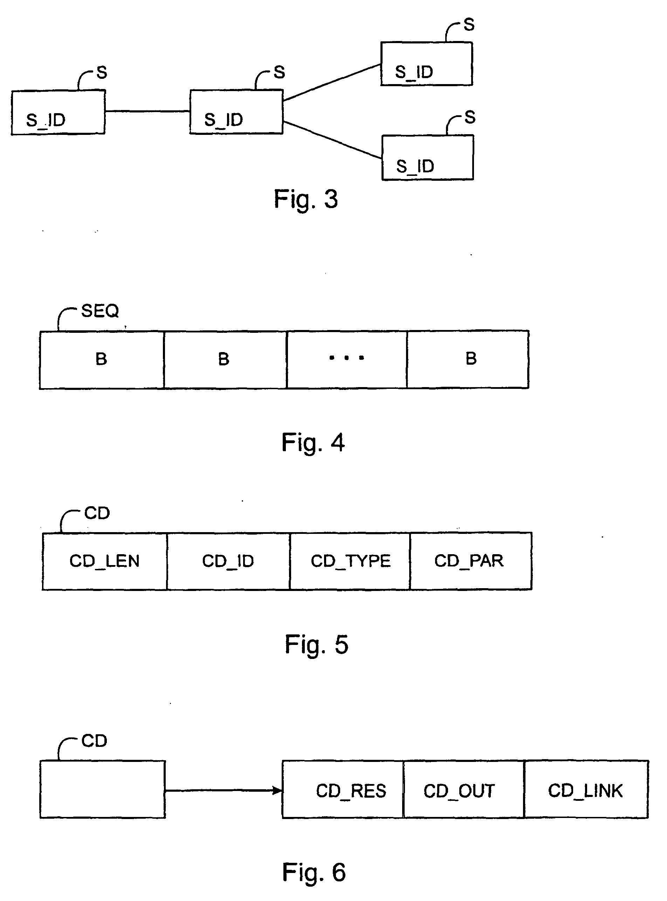

Un utilisateur accède à un service S compris dans la carte CARD, par exemple un service téléphonique, au moyen de son unité d'abonné SU. La carte comporte couramment plusieurs services. Un service S fait appel généralement à un ou plusieurs autres services, comme le montre la figure 3. A un service est associé une ou plusieurs séquences SEQ de commandes permettant l'utilisation dudit service par l'utilisateur. A chaque service est associé un identifiant S_ID. Une séquence SEQ de commandes comporte un ou plusieurs blocs B comme le montre la figure 4. A chaque séquence est associé un identifiant de séquence SEQ_ID.

Pour permettre l'accès à un service S par l'utilisateur, la carte CARD comporte des moyens de sélection de service SERVICESELECT (non représenté), lesdits moyens étant compris dans la première mémoire M1. Lorsque l'utilisateur allume son unité d'abonné, il a accès à un menu affiché sur son écran grâce auxdits moyens de sélection de service SERVICESELECT. Il sélectionne un service.

Selon un mode de réalisation non limitatif, les étapes décrites ci-après permettent de fournir le service choisi à l'utilisateur.

Dans une première étape, on interprète dans la carte au moins un bloc de séquence de commandes grâce aux moyens d'interprétation MI. Dans notre cas, un premier bloc B de séquence de commandes propre au service sélectionné est interprété et la première commande CD à exécuter dudit bloc B est exécutée. On notera que la première commande à exécuter n'est pas forcément la première du bloc. Soit la commande CD est exécutée dans la carte par le premier programme d'exécution P1, soit elle est transmise à l'unité d'abonné SU et exécutée par le deuxième programme d'exécution P2.

Préférentiellement, Comme le montre la figure 5, une commande CD comporte les champs suivants :
- une longueur CD_LEN,
- un identifiant CD_ID unique dans la séquence,
- un type CD_TYPE de commande,
- des paramètres d'entrée CD_PAR.

Après l'exécution d'une commande, comme le montre la figure 6 on obtient les données suivantes :
- des données de résultat CD_RES,
- des données de sortie CD_OUT donnant par exemple une valeur de code entrée par l'utilisateur à la suite de l'exécution d'une commande d'entrée de code,
- des données de liaison CD_LINK indiquant la commande suivante à exécuter. Ces données permettent de ne pas obligatoirement exécuter les commandes dans l'ordre de présence dans le bloc.

Préférentiellement, les données de sortie CD_OUT ont un format de type TLV défini dans le standard GSM 11.14.

Par exemple, on peut avoir une commande d'affichage de texte DISPLAYTEXT sur l'écran de l'unité d'abonné. Ladite commande comprend comme paramètre d'entrées :
- un qualifiant DISPLAYTEXT_QUAL,
- un identifiant destinataire DISPLAYTEXT_DDI,
- des paramètres DISPLAYTEXT_PAR propres à ladite commande, comme par exemple le texte à afficher.

Préférentiellement, le type de commande DISPLAY_TYPE, le qualifiant DISPLAY_QUAL et l'identifiant destinataire DISPLAY_DDI sont ceux définis dans le standard GSM 11.14 tandis que les paramètres DISPLAY_PAR sont de format TLV.

Préférentiellement, il existe des commandes permettant d'effectuer les actions suivantes :
- exécuter un service,
- sauvegarder une valeur de résultat de commande précédemment exécutée dans une variable,
- terminer l'exécution d'une séquence de commandes,
- branchement vers une autre commande,
- appel d'une autre séquence de commandes....

On notera que la liste des actions n'est pas exhaustive.

Par exemple, pour une commande de deuxième type dont l'action est de mettre fin à l'exécution d'un bloc de séquence et par suite d'une séquence, on aura les paramètres suivants :
- CD_LEN = 10,
- CD_ID = 2,
- CD_TYPE = EXIT,
- CD_PAR = 1, les données de sortie CD_OUT doivent être envoyées au serveur SERV.

Selon des valeurs des données de résultat CD_RES, préférentiellement, on exécute l'une des actions suivantes :
- on utilise les données de liaison CD_LINK afin de choisir la commande suivante à exécuter,
- on exécute la commande précédent la commande courante,
- on affiche un texte à l'écran de l'unité d'abonné et on exécute la commande précédent la commande courante,
- on ferme le service,
- on affiche un message d'erreur à l'écran de l'unité d'abonné, et on termine le service, un message de terminaison est envoyé au serveur SERV.

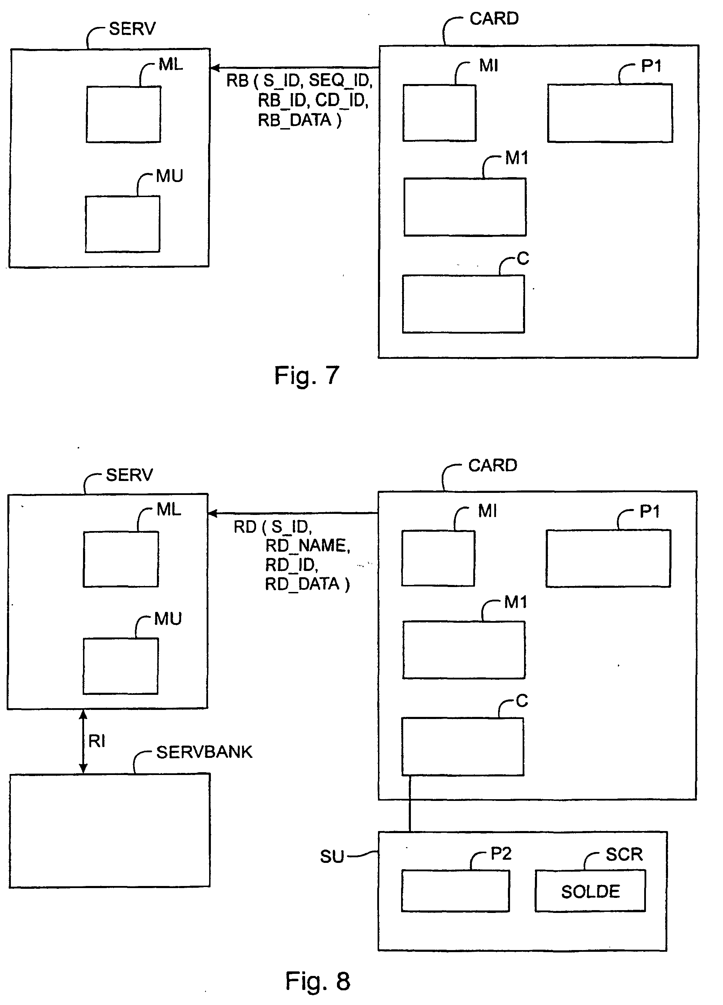

Dans une deuxième étape, après que la première commande CD à exécuter de bloc B de séquence a été exécutée, on recherche la commande suivante à exécuter, d'une part, dans le bloc B de séquence même, d'autre part, dans la première mémoire M1 de la carte si ladite commande ne se trouve pas dans le bloc de séquence, et, enfin, comme le montre la figure 7, au moyen d'une requête de bloc RB envoyée à partir de la carte vers le serveur, si la commande CD ne se trouve ni dans le bloc B de séquence, ni dans la première mémoire M1. Cela revient à rechercher un autre bloc de séquence, propre à un service, après l'exécution d'une commande d'un bloc de séquence. Ainsi, soit le bloc de séquence recherché est envoyé par le serveur SERV, soit le bloc de séquence recherché est issu de la première mémoire M1.

Préférentiellement, la recherche dans le bloc B se fait au moyen de son identifiant unique CD_ID tandis que la recherche dans la première mémoire M1 se fait au moyen de son identifiant unique CD_ID, de l'identifiant de la séquence SEQ_ID en cours et du service S_ID,

Selon un mode de réalisation particulier, une requête de bloc RB comprend les éléments suivants :
- l'identifiant du service S_ID en cours,
- l'identifiant de la séquence SEQ_ID courante,
- un identifiant de requête RB_ID,
- un identifiant de la commande CD_ID à exécuter,
- des données générales RB_DATA correspondant aux commandes CD exécutées précédemment à partir de la dernière requête quelconque faîte au serveur.

Chaque donnée générale RB_DATA comprend les éléments suivants :
- une longueur des données suivantes CD_LENDATA,
- l'identifiant de la commande CD_ID qui a été exécutée,
- des données résultats CD_RES,
- des données de sortie CD_OUT.

Préférentiellement, la dernière donnée est de format TLV notamment défini dans le standard GSM 11.14.

Ainsi, les données comprises dans la requête de bloc RB fournissent au serveur SERV un moyen de traçage des actions de l'utilisateur lors de l'utilisation d'un service S.

Dans une troisième étape, en réponse à la requête de bloc RB, un autre bloc B de la séquence correspondant au service utilisé est chargé à partir du serveur vers la carte. Le chargement d'un bloc B de séquence se fait en une ou plusieurs fois selon les capacités du protocole de communication utilisé pour les échanges de données entre le serveur SERV et la carte CARD. Ensuite, on exécute les différentes commandes CD du bloc envoyé comme décrit précédemment. Bien entendu, cette étape s'applique également lors de la première étape, si le premier bloc à exécuter de la séquence ne se trouve pas dans la carte.

De préférence, lors d'un premier envoi de commandes, on affiche à l'écran de son unité d'abonné SU un message d'attente M_WAIT afin de faire patienter l'utilisateur. Avantageusement, dès réception dans la carte d'une commande CD à exécuter du bloc B de séquence en cours de chargement, on exécute ladite commande. Ainsi, on évite d'attendre que le bloc B de séquence soit chargé entièrement avant l'exécution d'une quelconque commande, ce qui pourrait paraître long audit utilisateur.

Dans le cas où on envoie un bloc B de séquence avec un identifiant de requête de bloc RB_ID différent de celui de la requête envoyé, on n'exécute pas les commandes de ce bloc et on attend le bon bloc B de séquence.

Dans le cas d'un envoi d'un bloc B de séquence en plusieurs fois, pendant l'exécution d'une commande CD du bloc de séquence, on reçoit dans la carte au moins une autre commande du bloc B de séquence, ladite commande est par suite sauvegardée dans un buffer BUFF de la carte CARD en attendant d'être exécutée.

Dans le cas où, par exemple au bout de trente secondes, aucun bloc B de séquence n'est envoyé en réponse à une requête RB de la carte, un message d'erreur M_ERROR est affiché sur l'écran de l'unité d'abonné SU et on ferme le service S en cours d'utilisation.

Enfin, lorsque l'ensemble des blocs de la séquence a été appelé, chargé et exécuté, trois cas se présentent :
- on commence un autre service,
- le service n'est pas terminé,
- le service est terminé et on ne fait appel à aucun autre service.

Dans le premier cas, on commence un autre service au moyen d'une requête de bloc RB décrite précédemment. L'identifiant du service en cours S_ID est remplacé par l'identifiant du nouveau service demandé.

Dans le deuxième cas, deux choix sont possibles :
- -soit aucune données d'interaction n'est nécessaire pour continuer le service, par suite on recherche la séquence suivante. La séquence recherchée est, soit, issue de la première mémoire M1, soit, la séquence recherchée est envoyée par le serveur SERV si la séquence ne se trouve pas dans ladite mémoire M1. Dans ce dernier cas, on envoie une requête de bloc RB décrite précédemment, l'identifiant de la commande à exécuter n'étant pas rempli. Des données d'interaction sont des données provenant d'un serveur de service tel qu'un serveur bancaire. Pai exemple des données d'interaction sont un solde de compte bancaire.
- soit des données d'interaction sont nécessaires pour continuer le service. A cet effet, la carte CARD comporte des moyens de requêtes de données RD, lesdites données étant envoyées par un serveur de service. Par suite, une requête de données RD est envoyée à partir de la carte vers le serveur SERV comme le montre la figure 8.

Selon un mode de réalisation particulier, une requête de données comprend les éléments suivants :
- l'identifiant du service S_ID en cours,
- un nom de requête RD_NAME,
- un identifiant de requête RD_ID
- des données générales RD_DATA correspondant aux commandes CD exécutées précédemment depuis la dernière requête quelconque faîte au serveur.

Par exemple, on peut avoir une requête dont le nom est SOLDE, ce qui correspond à une demande de solde de compte. Le serveur SERV du dispositif de chargement interagit avec au moins un serveur de service, ici un serveur bancaire SERVBANK et ladite requête est transmise par le serveur SERV du dispositif de chargement audit serveur bancaire SERVBANK. Par suite, le solde est envoyé par le serveur bancaire SERVBANK au serveur SERV du dispositif de chargement qui le transmet à la carte CARD pour l'afficher sur l'écran SCR de l'unité d'abonné SU.

Ainsi, conformément à la requête RD, un bloc B d'une nouvelle séquence comportant les données d'interaction demandées est envoyé à partir du serveur vers la carte et, dans le même temps, on ordonne son exécution dans la carte CARD. Dès réception de la première commande CD à exécuter dudit bloc B, celle-ci est exécutée, soit par le premier programme d'exécution P1, soit par le deuxième programme d'exécution P2, et ainsi de suite....

Bien entendu, on prévoit des moyens de sauvegarde de bloc B de séquence dans la première mémoire M1 afin de pouvoir l'utiliser dans le futur.

Cependant, il serait également intéressant de pouvoir utiliser un bloc B de séquence, par exemple, même après un redémarrage de l'unité d'abonné SU par l'utilisateur. A cet effet, avantageusement, on prévoit que la première mémoire M1 est non volatile. Ainsi, les blocs de séquence, sauvegardés dans la première mémoire M1, ne sont plus effacés lorsque l'utilisateur a fini d'utiliser un service S ou lorsque l'utilisateur éteint son unité d'abonné SU, comme dans le cas d'une mémoire temporaire. Dans le même temps, cette réutilisation, permet de diminuer le nombre d'interactions entre la carte et le serveur en diminuant le nombre de requêtes.

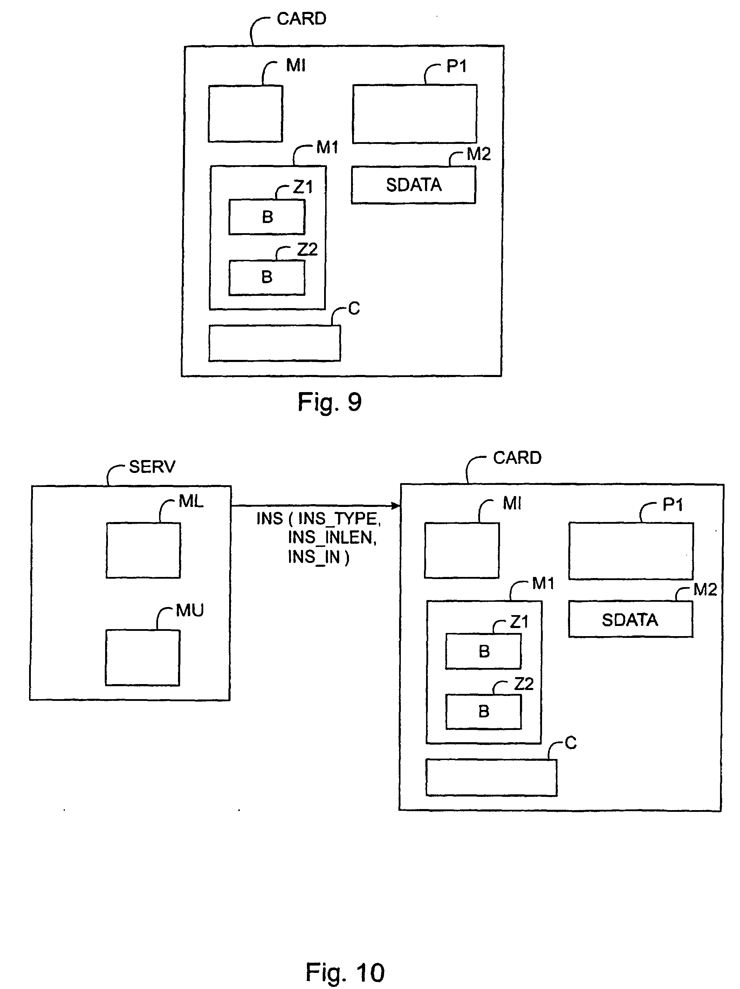

La première mémoire M1 est représentée sur la figure 9. Selon un mode de réalisation avantageux, elle comporte une première et une deuxième zones Z1 et Z2, la première zone Z1 étant accessible en lecture et écriture par le serveur et en lecture par la carte, la deuxième zone Z2 étant accessible en lecture et écriture par la carte. Un partage de la première mémoire en deux zones distinctes présente l'avantage de pouvoir envoyer et sauvegarder à tout moment des blocs B de séquence à la carte au moyen du serveur SERV sans perturber le fonctionnement du service S en cours d'utilisation dans la carte et sans affecter le temps d'exécution dudit service. Quant à la carte, elle a accès à la première zone Z1 lors d'une recherche. Ainsi, le serveur comporte des premiers moyens de sauvegarde de bloc de séquence MSSEQ1 étant apte à sauvegarder au moins un bloc de séquence dans la première zone Z1 de la première mémoire M1, la carte comporte des deuxièmes moyens de sauvegarde de bloc de séquence MSSEQ2 étant apte à sauvegarder au moins un bloc de séquence dans la deuxième zone Z2 de la première mémoire M1.

Selon le même principe vu pour les blocs de séquence, on peut vouloir sauvegarder, par exemple, un numéro de compte bancaire afin d'éviter à l'utilisateur de taper à chaque consultation de compte ledit numéro. Aussi, on prévoit des moyens de sauvegarde de données MSDATA permettant de sauvegarder des données utiles à un service S dans la carte. A cet effet, ladite carte CARD comporte une deuxième mémoire M2 non volatile comprenant des données SDATA propres à au moins un service S.

Ces blocs B de séquence sauvegardés dans la première zone Z1 de la première mémoire M1 peuvent être mise à jour grâce aux moyens de mise à jour MU du serveur. De même, la carte comporte des moyens de mise à jour MUD de données SDATA sauvegardées dans la deuxième mémoire M2 de la carte. Par mise à jour, on entend pouvoir modifier, effacer ou ajouter dans la carte, un bloc de séquence ou des données propres à un service. Par exemple, dans le cas d'un service téléphonique permettant à l'utilisateur, d'une part, d'appeler automatiquement un répondeur de cinéma donnant les séances de films et, d'autre part, d'appeler automatiquement un service donnant les cours de la bourse en direct, si l'utilisateur n'a pas payé le service boursier, grâce auxdits moyens de mise à jour, on met à jour dans ladite première mémoire M1, au moins un bloc B de séquence de commandes propre à un service S, ici propre au service boursier en effaçant ledit service boursier tout en lui laissant les autres services. Ainsi, il est inutile de recharger tout le service téléphonique et les services sous-jacents.

Afin d'effectuer les actions d'envoyer un bloc B de séquence à la carte, d'ordonner l'exécution d'un bloc, de sauvegarder ou de mettre à jour un bloc ou des données SDATA, selon un mode de réalisation non limitatif, on envoie à partir du serveur SERV vers la carte CARD des instructions INS comprenant de préférence les éléments suivants, comme le montre la figure 10 :
- type d'instruction INS_TYPE,
- longueur des données d'entrée INS_INLEN,
- données d'entrée INS_IN.

Préférentiellement, on a deux types d'instructions :
- le premier type INS_TYPE1 est utilisé pour gérer le buffer BUFF de la carte, par exemple une instruction de premier type permet d'envoyer à la carte, un bloc de séquence et/ou ordonner à la carte l'exécution d'un bloc de séquence.
- le deuxième type INS_TYPE2 est utilisé pour gérer la première mémoire M1, par exemple une instruction de deuxième type permet de sauvegarder ou mettre à jour un bloc de séquence propre à un service S.

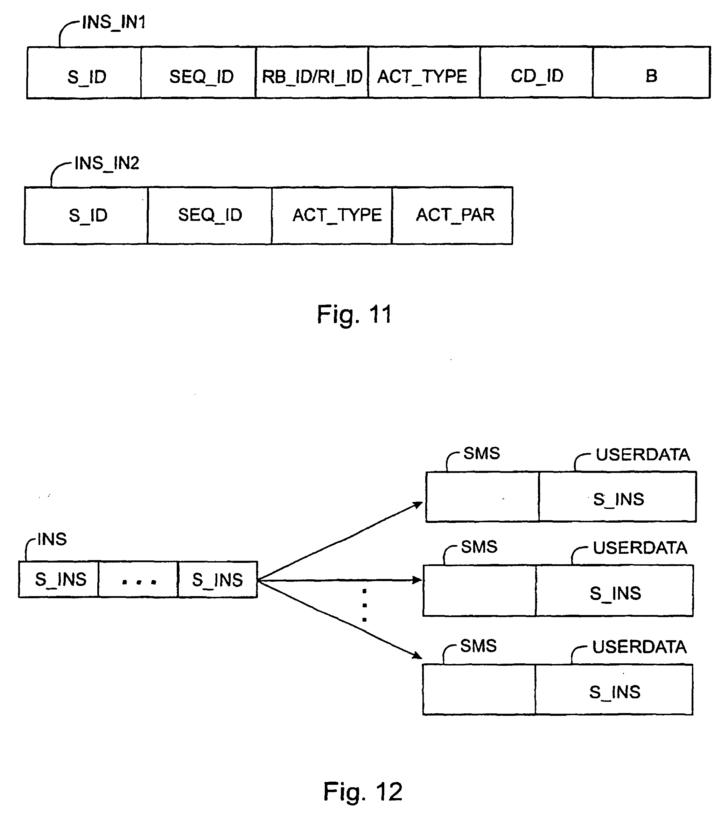

Comme le montre la figure 11, les données d'entrée INS_IN1 de premier type INS_TYPE1 sont les suivantes :
- identifiant du service S_ID en cours d'utilisation,
- identifiant de séquence SEQ_ID,
- identifiant de requête RB_ID ou RD_ID,
- type de l'action ACT_TYPE à effectuer,
- identifiant de la commande CD_ID à exécuter en premier, dans le cas d'un bloc B de séquence envoyé,
- bloc B de séquence à envoyer.

On notera que d'autres données d'entrée peuvent figurer dans la liste donnée ci-dessus, telles que des données assurant un transfert sécurisé comme une signature de données par exemple.

Les actions pouvant être effectuées sont les suivantes :
- exécution du bloc de séquence envoyé,
- ne pas exécuter le bloc de séquence envoyé,
- sauvegarde du bloc de séquence envoyé dans une mémoire tampon de la carte sans effacement de ladite mémoire,
- sauvegarde du bloc de séquence envoyé dans une mémoire tampon de la carte avec effacement préalable de ladite mémoire....

Les données d'entrée INS_IN2 de second type INS_TYPE2 sont les suivantes :
- identifiant du service S_ID visé,
- identifiant de séquence SEQ_ID,
- type de l'action ACT_TYPE à effectuer,
- paramètres dépendants de l'action à effectuer ACT_PAR.

Les actions pouvant avantageusement être effectuées sont les suivantes :
- effacement d'un bloc de séquence et remplacement par un autre,
- ajout d'un autre bloc de séquence propre à un service,
- remplacement d'un ensemble de commandes dans un bloc de séquence...
Bien entendu, dans les deux cas, la liste des actions pouvant être effectuées n'est pas limitative.

A la réception d'une instruction INS dans la carte, ladite instruction est interprétée dans la carte et les actions associées exécutées.

On notera que, dans le domaine de la téléphonie mobile, préférentiellement, afin de rester compatible avec les unités d'abonné SU et cartes CARD existants sur le marché, une instruction ou une requête est envoyée, par voies hertziennes, au moyen d'un protocole de communication basé sur un service de messages courts standardisé couramment appelé SMS. Pour les autres domaines, on utilise le même protocole ou tout autre protocole connu de l'état de la technique.

Cependant, on ne peut pas toujours envoyer la totalité d'une instruction ou requête au moyen d'un message court en raison des capacités limitées desdits messages courts. C'est pourquoi, comme le montre la figure 12 fréquemment, on envoie une instruction INS au moyen de plusieurs messages courts SMS. Ainsi, une instruction INS est découpée et envoyée par sections S_INS. Il en va de même pour une requête. Un message court comprend un emplacement utilisateur USERDATA dans lequel on place une section S_INS d'instruction. Afin d'utiliser au maximum ledit emplacement utilisateur, on ne laisse aucun espace de libre. Aussi, un bloc de séquence B compris dans une instruction INS comprend tout ou partie d'une commande selon le découpage en sections de ladite instruction INS.

De la même manière, des commandes, telles que les commandes exécutées par le deuxième programme P2 de l'unité d'abonné SU, comme par exemple une commande d'affichage de texte à l'écran vue précédemment, sont compatibles avec les commandes définies dans le standard GSM 11.14, appelées également commandes SIMTOOLKIT, afin d'être compréhensibles par les unités d'abonné standards. Aussi, on prévoit que la carte comporte des moyens de transcription MT d'une commande vers une commande SIMTOOLKIT.

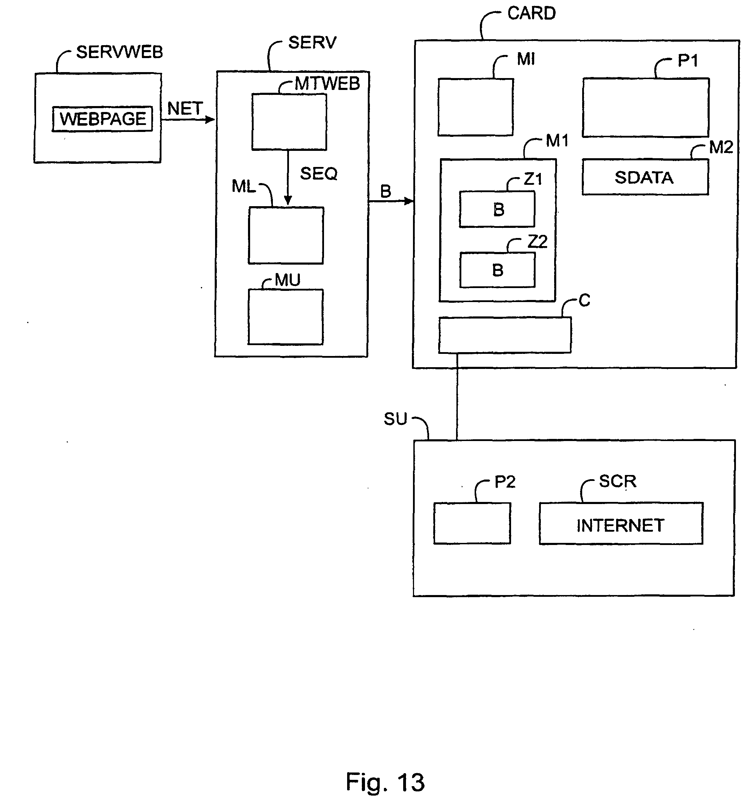

La présente invention s'applique particulièrement à des services de type internet. Comme le montre la figure 13, un serveur de service internet SERVWEB comporte des services internet représentés par des pages web WEBPAGE codées dans un langage connu tels que les langages HTML ou WML. Par un réseau de communication standard NET, un serveur SERV du dispositif de chargement de commandes selon l'invention, communique avec le serveur internet. Dans le serveur de chargement, on accède au service internet au moyen des pages WEB transmises par le réseau de communication. Le serveur SERV du dispositif de l'invention, comporte des moyens de transcription MTWEB d'une page web en séquences SEQ de commandes décrites précédemment. Afin de permettre l'accès aux services internet à un utilisateur donné, il suffit de charger, au fur et à mesure des besoins de l'utilisateur, les blocs B des séquences ainsi transcrits dans la carte CARD de l'utilisateur comme vu précédemment. L'utilisateur a ainsi accès au service internet INTERNET au moyen de l'écran SCR de son unité d'abonné. Bien entendu, pour répondre à une requête de la carte, il est nécessaire d'accéder au serveur internet. A cet effet, le serveur SERV du dispositif de l'invention comporte des moyens d'interrogation MA du serveur internet pour obtenir les données nécessaires à ladite requête.

Bien entendu, le cadre de l'invention n'est nullement limité au mode de réalisation décrit et s'étend à d'autres modes de réalisation dans lesquels, notamment, le dispositif de chargement est pourvu de moyens complémentaires destinés à assurer une complète sécurité des données échangées.

## Revendications

1. Système informatique comprenant au moins un serveur (SERV) et au moins une carte à circuit intégré (CARD) reliés entre eux par l'intermédiaire d'un réseau, ladite carte comprenant un premier programme d'exécution (P1) de commandes et une première mémoire (M1), **caractérisé en ce que**,
d'une part, une carte (CARD) comprend:
- des moyens de recherche de blocs (B) d'une séquence de commandes, aptes à rechercher sur un serveur (SERV) et dans ladite mémoire (M1) un bloc d'une séquence de commandes propre à un service, au moins une commande (CD) dudit bloc (B) étant exécutée par le premier programme d'exécution (P1) ou transmise à une unité d'abonné (SU) et exécutée par un deuxième programme d'exécution (P2) de cette unité d'abonné (SU),
et, d'autre part, ledit serveur (SERV) comprend :
- des moyens (ML) pour charger dans la carte au moins un bloc (B) d'une séquence (SEQ) de commandes, propre à un service (S).

2. Système selon la revendication 1, **caractérisé en ce que** la première mémoire (M1) est non volatile.

3. Système selon les revendications 1 ou 2, **caractérisé en ce que** ladite carte comporte une deuxième mémoire (M2) non volatile comprenant des données propres à au moins un service.

4. Système selon la revendication 1, **caractérisé en ce qu'**un serveur (SERV) comprend des moyens de sauvegarde (MSSEQ1,MSSEEQ2) d'au moins un bloc (B) d'une séquence de commandes dans la première mémoire (M1),

5. Système selon la revendication 1, **caractérisé en ce qu'**un serveur (SERV) comprend des moyens de mise à jour (MU) aptes à modifier, effacer, ajouter, dans la première mémoire (M1) au moins un bloc (B) d'une séquence de commandes.

6. Système selon la revendication 1, **caractérisé en ce que** la première mémoire (M1) comporte une première zone (Z1) et une deuxième zone (Z2), la première zone (Z1) étant accessible en lecture et écriture par le serveur et en lecture par la carte, la deuxième zone (Z2) étant accessible en lecture et écriture par la carte.

7. Procédé d'exécution de commandes dans un système informatique comprenant au moins un serveur (SERV) et une carte à circuit intégré (CARD) reliés entre eux par l'intermédiaire d'un réseau, ladite carte comprenant un premier programme d'exécution (P1) de commandes et une première mémoire (M1), **caractérisé en ce qu'**il comprend les étapes selon lesquelles :
- on sauvegarde tout ou partie des blocs d'une séquence de commandes propres à un service sur au moins un serveur (SERV) et la partie complémentaire éventuelle dans ladite mémoire (M1),
- la carte recherche chaque bloc (B) d'une séquence de commandes sur le serveur (SERV) ou dans la mémoire (M1),
- et **en ce que**, si le bloc (B) d'une séquence de commandes recherché est stocké sur le serveur (SERV) et pas dans la mémoire (M1), on charge ce bloc du serveur (SERV) vers la carte (CARD) pour être exécuté au moyen dudit premier programme (P1), ou au moyen d'un second programme (P2) d'une unité d'abonné (SU) connectée à ladite carte (CARD).

8. Procédé selon la revendication 7, **caractérisé en ce qu'**il consiste à sauvegarder ledit bloc (B) d'une séquence de commandes issue du serveur (SERV) dans la mémoire (M1).

9. Procédé selon la revendication 7 ou 8, **caractérisé en ce qu'**il consiste, par l'intermédiaire de moyens de mise à jour (MU), à mettre à jour dans ladite première mémoire (M1), au moins un bloc (B) d'une séquence de commandes propre à un service (S).

10. Procédé selon la revendication 7, **caractérisé en ce que** la recherche d'un bloc d'une séquence de commandes sur un serveur (SERV) consiste à émettre une requête de données (RD) à partir de la carte vers un serveur de service.

11. Carte à puce (CARD) apte à communiquer avec un serveur (SERV1), ladite carte comprenant un premier programme d'exécution (P1) de commandes et une mémoire (M1), **caractérisée en ce que** la carte comprend des moyens de recherche de blocs (B) d'une séquence de commandes aptes à rechercher sur ledit serveur et dans ladite mémoire (M1) un bloc d'une séquence de commandes propre à un service, au moins une commande (CD) dudit bloc (B) étant exécutée par le programme d'exécution (P1) ou transmise à une unité d'abonné (SU) et exécutée par un deuxième programme d'exécution (P2) de cette unité d'abonné (SU).

## Patentansprüche

1. Datenverarbeitungssystem mit mindestens einem Server (SERV) und mindestens einer Karte mit integrierter Schaltung (CARD), die über ein Netz miteinander verbunden sind, wobei die besagte Karte ein erstes Befehlausführungsprogramm (P1) und einen ersten Speicher (M1) umfasst, **dadurch gekennzeichnet, dass**
einerseits eine Karte (CARD) folgende Elemente umfasst:
- Suchmittel für Blöcke (B) einer Befehlsfolge, die auf einem Server (SERV) und im besagten Speicher (M1) einen einer Funktion entsprechenden Befehlsfolgeblock suchen können, wobei mindestens ein Befehl (CD) des besagten Blocks (B) vom ersten Ausführungsprogramm (P1) ausgeführt oder an eine Teilnehmereinheit (SU) übertragen und von einem zweiten Ausführungsprogramm (P2) dieser Teilnehmereinheit (SU) ausgeführt wird,
und andererseits der besagte Server (SERV) folgendes umfasst:
- Mittel (ML) zum Laden von mindestens einem einer Funktion (S) entsprechenden Block (B) einer Befehlsfolge (SEQ) auf der Karte.

2. System nach Anspruch 1, **dadurch gekennzeichnet, dass** der erste Speicher (M1) ein permanenter Speicher ist.

3. System nach den Ansprüchen 1 oder 2, **dadurch gekennzeichnet, dass** die besagte Karte einen zweiten permanenten Speicher (M2) mit Daten umfasst, die zu mindestens einer Funktion gehören.

4. System nach Anspruch 1, **dadurch gekennzeichnet, dass** ein Server (SERV) Speichermittel (MSSEQ1, MSSEEQ2) für mindestens einen Block (B) einer Befehlsfolge im ersten Speicher (M1) umfasst.

5. System nach Anspruch 1, **dadurch gekennzeichnet, dass** ein Server (SERV) Aktualisierungsmittel (MU) umfasst, die im ersten Speicher (M1) mindestens einen Block (B) einer Befehlsfolge ändern, löschen und hinzufügen können.

6. System nach Anspruch 1, **dadurch gekennzeichnet, dass** der erste Speicher (M1) eine erste Zone (Z1) und eine zweite Zone (Z2) enthält, wobei die erste Zone (Z1) für den Server zum Lesen und Schreiben und für die Karte zum Lesen zugänglich ist und die zweite Zone (Z2) für die Karte zum Lesen und Schreiben zugänglich ist.

7. Befehlausführungsverfahren in einem Datenverarbeitungssystem mit mindestens einem Server (SERV) und einer Karte mit integrierter Schaltung (CARD), die über ein Netz miteinander verbunden sind, wobei die besagte Karte ein erstes Befehlausführungsprogramm (P1) und einen ersten Speicher (M1) umfasst, **dadurch gekennzeichnet, dass** es folgende Schritte umfasst, nach denen:
- auf mindestens einem Server (SERV) alle oder Teile der einer Funktion entsprechenden Blöcke einer Befehlsfolge und der eventuelle ergänzende Teil im besagten Speicher (M1) gespeichert werden,
- die Karte auf dem Server (SERV) oder im Speicher (M1) jeden Block (B) einer Befehlsfolge sucht,
- und dadurch, dass, wenn der gesuchte Block (B) einer Befehlsfolge auf dem Server (SERV) und nicht im Speicher (M1) gespeichert ist, dieser Block vom Server (SERV) auf die Karte (CARD) geladen wird, um mittels dem besagten ersten Programm (P1) oder mittels einem zweiten Programm (P2) einer mit der besagten Karte (CARD) verbundenen Teilnehmereinheit (SU) ausgeführt wird.

8. Verfahren nach Anspruch 7, **dadurch gekennzeichnet, dass** es darin besteht, den besagten Block (B) einer Befehlsfolge des Servers (SERV) im Speicher (M1) abzuspeichern.

9. Verfahren nach Anspruch 7 oder 8, **dadurch gekennzeichnet, dass** es darin besteht, über Aktualisierungsmittel (MU) mindestens einen einer Funktion (S) entsprechenden Block (B) einer Befehlsfolge im besagten ersten Speicher (M1) zu aktualisieren.

10. Verfahren nach Anspruch 7, **dadurch gekennzeichnet, dass** das Suchen eines Blocks einer Befehlsfolge auf einem Server (SERV) darin besteht, ausgehend von der Karte eine Datenanfrage (RD) an einen Funktionsserver zu senden.

11. Zur Kommunikation mit einem Server (SERV1) fähige Chipkarte (CARD), wobei besagte Karte ein erstes Befehlausführungsprogramm (P1) und einen Speicher (M1) umfasst, **dadurch gekennzeichnet, dass** die Karte Suchmittel für Blöcke (B) einer Befehlsfolge umfasst, die auf dem besagten Server und im besagten Speicher (M1) einen einer Funktion entsprechenden Block einer Befehlsfolge suchen können, wobei mindestens ein Befehl (CD) des besagten Blocks (B) vom Ausführungsprogramm (P1) ausgeführt oder an eine Teilnehmereinheit (SU) übertragen und von einem zweiten Ausführungsprogramm (P2) dieser Teilnehmereinheit (SU) ausgeführt wird.

## Claims

1. Computer system including at least one server (SERV) and at least one integrated circuit card (CARD) connected together via a network, said card including a first command execution program (P1) and a first memory (M1), **characterised in that**,
firstly, a card (CARD) includes:
- means to search for blocks (B) of a command sequence capable of searching on a server (SERV) and in said memory (M1) for a block of a command sequence specific to a service, at least one command (CD) of said block (B) being executed by the first execution program (P1) or transmitted to a subscriber unit (SU) and executed by a second execution program (P2) of this subscriber unit (SU),
and secondly, said server (SERV) includes:
- means (ML) to load in the card at least one block (B) of a sequence (SEQ) of commands, specific to a service (S).

2. System according to claim 1, **characterised in that** the first memory (M1) is non volatile.

3. System according to claims 1 or 2, **characterised in that** said card includes a second non volatile memory (M2) including data specific to at least one service.

4. System according to claim 1, **characterised in that** a server (SERV) includes means to back up (MSSEQ1,MSSEEQ2) at least one block (B) of a command sequence in the first memory (M1).

5. System according to claim 1, **characterised in that** a server (SERV) includes update means (MU) capable of modifying, erasing, adding, in the first memory (M1) at least one block (B) of a command sequence.

6. System according to claim 1, **characterised in that** the first memory (M1) includes a first area (Z1) and a second area (Z2), the first area (Z1) having read and write access by the server and read access by the card, the second area (Z2) having read and write access by the card.

7. Method to execute commands in a computer system including at least one server (SERV) and an integrated circuit card (CARD) connected together via a network, said card including a first command execution program (P1) and a first memory (M1), **characterised in that** it includes the steps according to which:
- all or some of the blocks of a command sequence specific to a service are backed up on at least one server (SERV) and the additional part, if any, in said memory (M1),
- the card searches for each block (B) of a command sequence on the server (SERV) or in the memory (M1),
- and **in that**, if the block (B) of a command sequence sought is stored on the server (SERV), and not in the memory (M1), this block is loaded from the server (SERV) to the card (CARD) to be executed using said first program (P1), or using a second program (P2) in a subscriber unit (SU) connected to said card (CARD).

8. Method according to claim 7, **characterised in that** it consists of backing up said block (B) of a command sequence from the server (SERV) in the memory (M1).

9. Method according to claim 7 or 8, **characterised in that** it consists, via update means (MU), of updating in said first memory (M1), at least one block (B) of a command sequence specific to a service (S).

10. Method according to claim 7, **characterised in that** the search for a block of a command sequence on a server (SERV) consists of transmitting a data request (RD) from the card to a service server.

11. Smart card (CARD) capable of communicating with a server (SERV1), said card including a first command execution program (P1) and a memory (M1), **characterised in that** the card includes means to search for blocks (B) of a command sequence capable of searching on said server and in said memory (M1) for a block of a command sequence specific to a service, at least one command (CD) of said block (B) being executed by the first execution program (P1) or transmitted to a subscriber unit (SU) and executed by a second execution program (P2) of this subscriber unit (SU).
